# EUROPEAN PATENT APPLICATION

(11) **EP 0 562 189 A1**
(43) Date of publication of application: **29.09.1993**
(21) Application number: 92306850.6
(22) Date of filing: 27.07.1992
(51) Int. Cl.: H01B 13/00, B65G 49/00

(54) **Fabrication of wiring harnesses**

(30) Priority: 27.03.1992 GB 9206739
(71) Applicant: UNITED TECHNOLOGIES AUTOMOTIVE (UK) LIMITED, Peterborough, Cambridgeshire PE2 0XU (GB)
(72) Inventor: Burns, Arthur Gerald, Peterborough PE2 OUR (US)
(74) Representative: Gilding, Martin John

(57) **Abstract**

A system for fabricating of wiring harnesses comprises a conveyor 20, work stations 22 disposed at intervals along the conveyor 20g e.g. a belt 42, component supplies 24 and assembly equipment accessible to an operator at each station (22). Most operators are located in a first corridor 30 at one side of and parallel with the conveyor. The supplies 24 and equipment are in a second corridor 32 wider than the first corridor at the opposite side of the conveyor, mounted so that they project over the conveyor 20 for access by operators. The belt 42 has equally spaced pairs of fingers 50 in groups, e.g. at least five pairs at each station 22 and is indexed to advance each group to the next work station and partially assembled components are positioned by the operator in designated ones of the finger pairs 50.

Modules 54 comprise a frame 40 on which supports 51, equipment and some component supplies can be mounted at selected interchangeable positions lengthwise of the conveyor 20. The system is flexible for producing different harnesses, using the same equipment, with effective utilisation of floor space.

## Description

This invention is concerned with the fabrication of wiring harnesses and especially with a system for the fabrication of wiring harnesses and the method of fabrication of such harnesses.

In the manufacture of electrical systems, especially for motor vehicles, it is a practice to group together wiring from various remote regions for connection to another part, for example a power source or control means. For ease of manufacture this assembly of wiring is effected independently to produce a so-called wiring harness which is then incorporated in the relevant equipment, for example a motor vehicle.

Manufacture of wiring harnesses is a labour intensive operation and, until recently, each harness has been progressively built up using a jig assembly, which is very complex where a complicated harness is being built. This system has been effective but relatively inefficient, requiring a considerable area of factory floor space to carry out preliminary assembly operations, as well as to build the final wiring harnesses.

It has been proposed, for example in European Patent Application No. 0413655, to automate the assembly of wiring harnesses utilising a conveyor system and this has significantly increased the efficiency of the operation. However, although the system described in EP 0413655 constitutes a considerable improvement over previous methods, efficiency of the system is still less than desirable.

It is one of the various object of the present invention to provide an improved system for fabrication of wiring harnesses.

It is another of the various object of the present invention to provide an improved conveyor system suitable for use in the fabrication of wiring harnesses.

It is yet another object of the present invention to provide an improved method for the fabrication of wiring harnesses.

The invention provides in one aspect a system for the fabrication of wiring harnesses comprising a conveyor extending lengthwise, a plurality of work stations disposed at intervals along the conveyor, supply means for supplying components to be assembled at some of said work stations, the supply means at a work station being positioned for access by the operator at that station, assembly equipment at some of said work stations, the assembly equipment at a work station being positioned for access by the operator at that station, a majority of the operators being located at one side of the conveyor in a first corridor parallel with the conveyor and the supply means being positioned at the opposite side of the conveyor to the majority of the operators in a second corridor parallel with the conveyor, wherein the second corridor is wider than the first corridor.

Preferably in a system as set out in the last preceding paragraph the second corridor is at least twice as wide as the first corridor which is conveniently about 1 metre in width.

Preferably a majority of operators are located in said first corridor, if possible all of the operators being located in the first corridor.

Desirably all assembly equipment is located in the second corridor, conveniently with part thereof projecting over the conveyor at an appropriate work station for access by the operator at that work station. Likewise the supply means is positioned in said second corridor with part thereof projecting over the conveyor at the appropriate work station for access by the operator at that work station. The supply means may conveniently comprise a carriage similar to that described with reference to Figure 3 of the aforementioned European patent application.

A system in accordance with the invention preferably comprises a plurality of retaining means adapted to engage part of a harness in the course of fabrication and retain it in position on the conveyor, the retaining means being equally spaced apart along the conveyor. A group comprising at least two, and preferably four or more, of such retaining means is located at each work station and advancing means is suitably arranged to operate, suitably at preselected time intervals, whereby to advance each group to the next succeeding work station.

In another aspect the invention may be considered to provide a system for the fabrication of wiring harnesses comprising a conveyor extending lengthwise and a plurality of work stations disposed along the conveyor, the conveyor comprising a plurality of retaining means adapted to engage part of a harness in the course of fabrication and retain it in position on the conveyor, the retaining means being spaced apart at equal intervals along the conveyor with a group comprising at least two such retaining means located at each work station, and indexing means arranged to operate at preselected time intervals whereby to advance each group to the next succeeding work station.

Preferably in a system in accordance with the invention the spacing between adjacent retaining means is up to 300 mm, suitably about 100 mm or 200 mm.

Preferably each retaining means comprises a pair of fingers spaced apart lengthwise of the conveyor a sufficient distance to receive and retain part of the wiring harness between the fingers. Suitably the fingers are resilient and the space between the free end portions of the fingers is less than the spacing between portions of the fingers remote from the free end portions thus to militate against accidental escape of the harness from between the fingers.

In another aspect the invention may be considered to provide a conveyor system suitable for use in the fabrication of wiring harnesses comprising a lengthwise extending frame assembly, endless conveying means extending lengthwise, support means for supporting and guiding the endless conveyor means, and a plurality of supports adapted to be removably secured to said frame assembly at preselected positions whereby to provide supports for components and equipment for access by an operator at an adjacent one of a plurality of work stations spaced apart along said conveyor system.

A system of fabrication of a wiring harness in accordance with the invention preferably utilises a conveyor system as set out in the last preceding paragraph.

Preferably in a conveyor system in accordance with the invention, the frame assembly comprises lengthwise extending frame members and the supports are slidable along the frame members, each support being adapted to be clamped to the frame members of the desired position. Suitably the frame member may also, or instead, comprise a plurality of sockets by which the supports may be mounted; the sockets are suitably disposed on ground engaging members of the frame assembly. Preferably the supports are adapted to be secured to the frame assembly at one side of the conveying means and to project above and across the conveying means towards the opposite side of the conveying means for ready access by an operator.

Preferably the frame assembly of the conveying means in accordance with the invention also mounts conduits for services, e.g. electrical or pneumatic services, to be provided at the work stations, outlets for the services at some, at least of the work stations, and at least one access means at which the services may be introduced to the conveyor system.

Preferably a conveyor system in accordance with the invention further comprises alarm means disposed for access at some at least of the work stations, the alarm means preferably comprising an operating portion, e.g. a wire member, extending along the length of the system and accessible to an operator at each work station.

Preferably a system in accordance with the invention further comprises at least one trough extending parallel with the conveyor and arranged adjacent the conveyor to receive parts of a wiring harness as it is conveyed by the conveying means; the trough may, if desired, be provided at both sides of the conveyor and in a conveying system in accordance with the invention the trough is preferably mounted on the frame assembly.

In another aspect the invention may be considered to provide a method for the fabrication of wiring harnesses comprising providing a conveyor system having a conveyor track, designating a plurality of work stations along said track, positioning an operator at each station at a first side of said track, and providing a supply of components to be assembled in a component supply means at each station at a second opposite side of the track, the method further comprising (a) an operator at a first station selecting components to be assembled from the supply at the first station and effecting a fabricating operation on the components and thereafter positioning the first component assembly on the conveyor track in a designated position and orientation; (b) thereafter advancing the conveyor means to carry said component assembly to a second station; (c) an operator at the second station selecting items from the component supply means at the second station and/or from assembled components on the conveyor track and effecting a further fabricating operation on said selected items and thereafter placing the components in a designated position and orientation on the conveyor track: and (d) advancing said conveyor track to transfer said assembled components successively to subsequent stations, the operator at each of the subsequent stations effecting further fabricating operations on components selected from the supply at each said subsequent station and/or from the assembled components on the conveyor track and placing the so-assembled components in designated positions and orientations on the conveyor track whereby to provide a desired wiring harness at a final work station.

In a method in accordance with the invention the conveyor track preferably comprises retaining means as discussed above, wherein at each work station a harness component assembly fabricated at that station is placed by the operator in one of the retaining means at a designated position at that work station and wherein, at least one selected work station, assembled components are removed from one of the retaining means which is located at a designated position on the conveying means at that station, for a further fabrication operation. In a method in accordance with the invention the spacing between adjacent retaining means is up to 300 mm and the length of each work station is an integral multiple of the spacing between adjacent retaining means and equal to the length of each advancing movement of the conveyor track, the length of each work station preferably being at least one metre. Suitably the spacing between adjacent retaining means may be about 100 mm or 200 mm.

Preferably in a method in accordance with the invention there is used a system in accordance with the invention.

There now follows a detailed description, to be read with reference to the accompanying drawings, of a method and system for the fabrication of wiring harnesses and a conveyor system for use therein, embodying the invention. It will be realised that these systems and methods have been selected for description to illustrate the invention by way of example.

In the accompanying drawings:
Figure 1 is a diagrammatic plan view of a fabrication system in accordance with the invention, showing a conveyor system in accordance with the invention;
Figure 2 is a rear view of the conveyor system showing retaining means, namely fingers, on conveying means of the conveyor system;

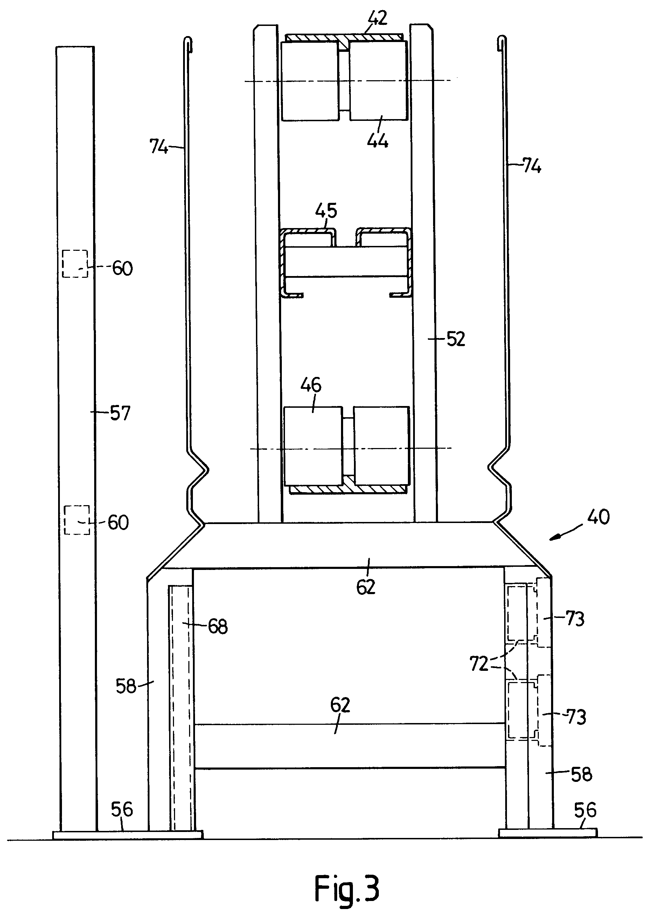

Figure 3 is an end view showing part of the illustrative conveyor system; and
Figure 4 is a view of part of the illustrative conveyor system showing the mounting of supports including an end view of a support for component supplies or equipment.

A system for the fabrication of wiring harnesses embodying the invention comprises a conveyor 20 extending lengthwise and a plurality of work stations 22 disposed at intervals along the conveyor. Supply means 24 are provided for supplying components to be assembled at some of the work stations, the supply means at each work station being positioned for access by an operator at that station. Assembly equipment 26 is positioned at various of the work stations; the assembly equipment may comprise, for example terminal assembly tools, moulding machines, taping machines, or build boards 28.

In the illustrative system, a majority of the operators 18 are located at one side of the conveyor 20 in a first corridor 30 parallel with the conveyor 20 and the supply means 24 and assembly equipment 26, 28 are positioned at the opposite side of the conveyor to the majority of the operators 18 in a second corridor 32 parallel with the conveyor. The second corridor 32 is wider than the first corridor. Suitably the first corridor is about 1 metre in width and the second corridor is about 2½ metres in width. The width of the conveyor is preferably less than the width of the first corridor, suitably about 0.5 metres (including any support troughs, discussed hereinafter).

Where possible all of the plant operators involved in actual fabrication of the wiring harnesses are disposed in the first corridor but in some instances, it may be necessary for a few operators to work in the second corridor, for example where the equipment which they must use is very large and cannot be arranged to be accessible from the first corridor.

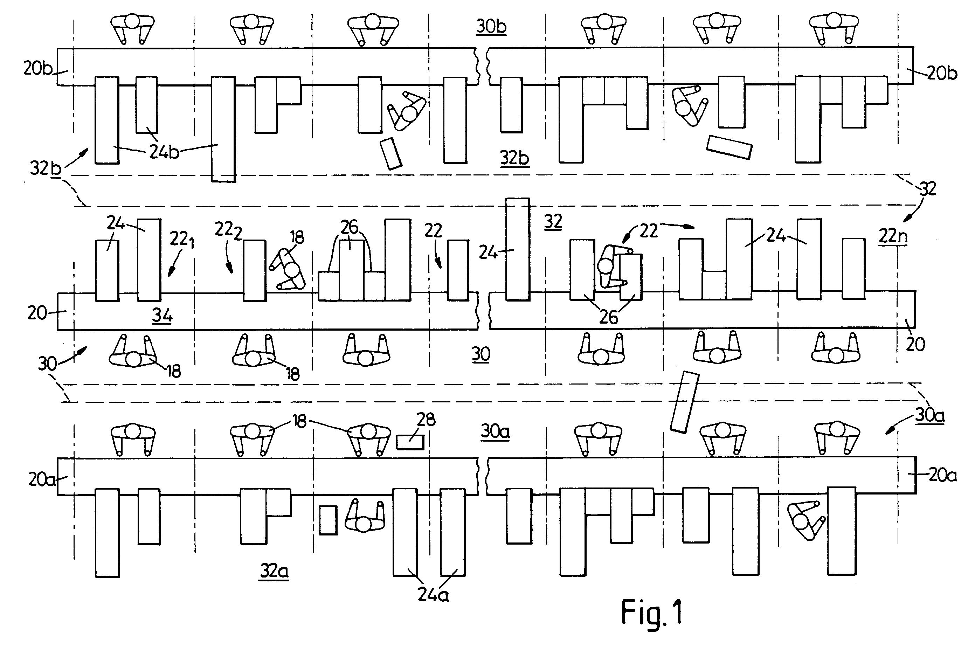

As can be seen viewing Figure 1 the supply means 24 and assembly equipment 26, 28 for use by operators in the first corridor 30 is mounted in the second corridor 32 for access by the operators, the supply means and equipment being arranged to project above conveying means 34 of the conveyor 20 so that it is readily accessible to the operator at the appropriate work station.

Preferably the entire corridor 30 is kept clear of equipment and merely provides a working space for the operators; however, in some circumstance it may be necessary to position small items of equipment within the corridor 30 for use by an operator at a particular work station 22. For greatest efficiency, however, it is essential to keep the first corridor 30 as narrow as possible which, in effect, makes a first corridor sufficiently wide to provide working space for each operator. A second corridor 32 may be of any width, though it too is preferably kept as narrow as possible. However, the supply means (which in some cases where trays of long wires are to be provided may be 2 metres, or sometimes more, in length), together with any large equipment must be accommodated within the second corridor 32. By inclining the supply means or some equipment at an oblique angle relative to the lengthwise direction of the conveyor 20, it may be possible to reduce the width of the second corridor 32. By adopting the system of fabricating wiring harnesses described above the actual floor are occupied by a production line may be minimised. By positioning production lines side by side with the conveyors 20 parallel and with first corridors 30 adjacent one another and with second corridors 32 likewise adjacent one another, the second corridors of adjacent production lines may be arranged to overlap one another to further efficiently use floor space, the larger pieces of equipment and supply means being arranged so that they are positioned between one another, see for example the supply means 24 of conveyor 20 and 24b of conveyor 20b in Figure 1. The region between the dash lines is the overlap between the corridors 32, 32b. In this way the factory floor space is even more efficiently utilised. However, it is necessary to ensure that access along each second corridor 32 (or adjacent pair of second corridors) is possible for introduction of further supply means.

In a fabricating system embodying the invention, each of the work stations 22 is the same length (suitably 1.2 metres) in the system 20 and the operations to be carried out at each work station are chosen so that the length of time needed by the operator at each work station to complete his fabricating tasks is substantially the same but slightly less than the time intervals at which the conveyor 20 is advanced from one work station 22 to the next succeeding work station 22.

The conveyor 20 utilised in the above described fabricating system embodying the invention is a conveyor system embodying the invention. This comprises a lengthwise extending frame assembly 40, endless conveying means, namely a belt conveyor 42, extending lengthwise of the conveyor 20, support means, namely guide rollers 44, 46 for supporting and guiding the belt 42 in known manner, the back (or inner) face of the belt being provided with a rib running in a groove in the rollers 44 and in certain of the rollers 46 to guide the belt 42. The belt 42 at either end of the conveyor line 20 passes round a large diameter roller 48 one of which is driven by drive means of known construction. The drive means comprises an electric motor (not shown) driving the roller 48 through a gearbox (not shown), the electric motor being under the control of a timer of the drive means arranged to cause the motor to operate at preselected intervals of time to cause the conveyor belt 42 to be advanced. The intervals of time during which the motor is active are selected so that the belt 42 is advanced through a distance equal to the length of a single work station 22 so that at each operation of the motor, the belt is advanced from each work station to the next work station downstream. The dwell time is set to be sufficient for each operator to complete the allotted task at each of the work stations 22. The dwell time and the operational time of the motor may be adjusted whereby to adjust the assembly time available at each work station and/or to adjust the operative length of each work station. Other systems of driving the conveyor belt 42 may, however, be adopted if preferred.

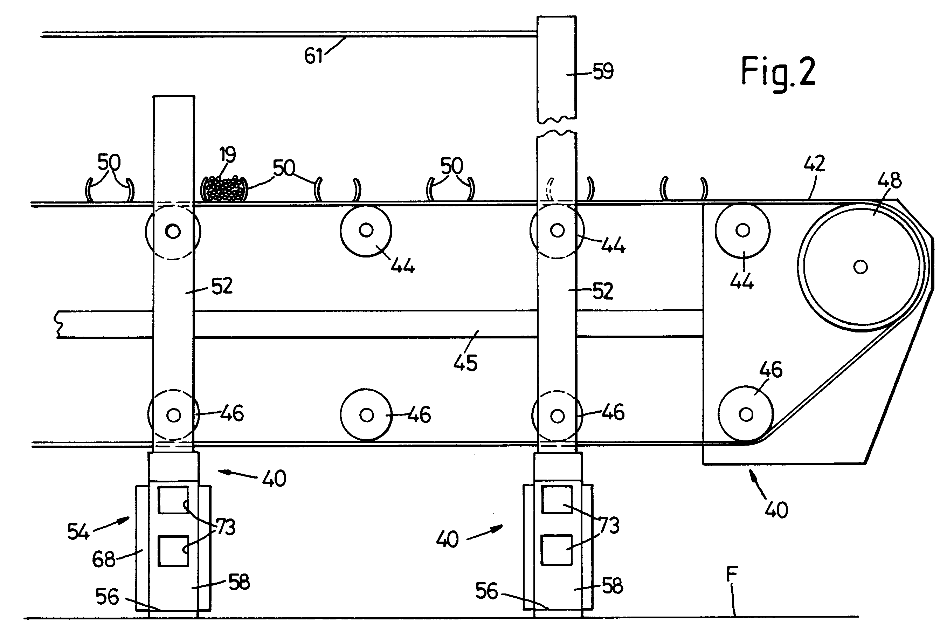

The conveyor belt 42 comprises a plurality of retaining means namely pairs of fingers 50, which are equally spaced one from the next. The pairs of fingers 50 are resilient, being of fairly stiff yet resilient rubber. The spacing between free end portions of the fingers is less than the spacing between portions of the fingers remote from the free end portions (see Figure 2) thus to militate against accidental escape of part of the harness 19 from between the fingers of each pair 50. The fingers 50 are therefore arranged to engage part of a harness in the course of fabrication and retain it in position on the conveyor belt 42 as the conveyor belt 42 is advanced from one work station to the next. In the illustrative conveyor system the pairs of fingers 50 are spaced apart at 100 mm intervals and each work station is 1.2 metres in length. Thus the length of each work station 22 is an integral multiple of the spacing between adjacent fingers 50 and there are therefore 12 pairs of fingers 50 present at each work station 22. Whereas the retaining means of the illustrative conveyor system are rubber fingers, the retaining means may be provided by any other suitable apparatus, for example so-called panduit clips. Panduit clips are clips comprising a pair of spaced resilient metal fingers carrying plastics formations at free end portions thereof which abut one another but which can be separated to introduce parts of a wiring harness assembly between the fingers. Panduit clips, if used, may be oriented with their fingers spaced apart lengthwise of the belt 42 and may be mounted for restricted pivotal movement about an axis extending transversely to the belt at right angles to its direction of movement. Conveniently the clips may be mounted in a recess in a cylindrical acetyl resin body accommodating an axle passing through the body from end to end and passing through the body of the clip mounting the fingers. The shape of the recess in the acetyl resin cylinder is chosen to restrict the pivotal movement of the clip about the axle to an arc of about 60°. Conveniently the cylinder is chosen to be of a diameter to be received between the rubber fingers 50 of the belt 42 and secured thereto. However, other mounting systems may be adopted.

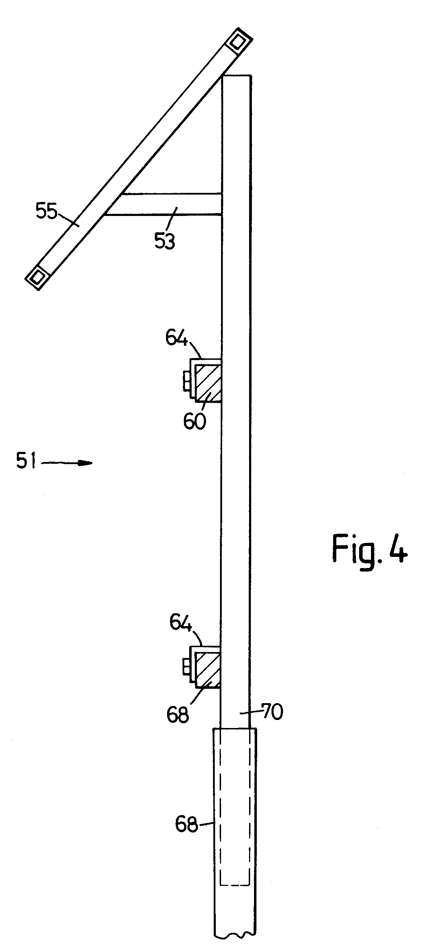

The conveyor system embodying the invention further comprises a plurality of supports 51 (Figure 4) adapted to be removably mounted on the frame assembly 40 at preselected positions whereby to provide supports for component supplies 24 and/or assembly equipment 26, 28, for access by an operator and at an adjacent one of the work stations 22. Each support 51 comprises an upright member 70 which extends upwardly from its mountings on the frame assembly 40, above the level of the uppermost surface of the conveyor belt 42 and well clear of the fingers 50. The supports are arranged at the rear of the conveyor belt, in the second corridor 32 and project forwardly over the conveyor 20 towards the first corridor 30 so that items supported by the supports 51 are readily accessible to an operator at the appropriate work station 22. Some of the supports 51 comprise a bracket arrangement 53 secured to the member 70 to effect this. The bracket arrangement 53 is arranged to support a table 55 on which a component supply, an assembly jig or equipment may be carried inclined downwardly towards the operator at a convenient angle, e.g. 45°-55°, preferably about 51°, to the horizontal. For some equipment, however, a horizontal table may be preferred.

The frame assembly 40 is of modular construction and comprises a plurality of modules 54 each module 54 comprising ground engaging members namely feet 56 at either end of the module, a number of frame members 58 extending upwardly from the feet 56, transverse frame members 62 interconnecting upright members 58, further spaced pairs of parallel upright members 52 secured to upper ones of the transverse members 62 and a main lengthwise extending beam 45 received between the members 52 and secured thereto, to provide a rigid frame assembly. Additional frame members (not shown) are secured to the upright members 58 and extended lengthwise. Adjacent modules 54 are secured to one another by suitable means, for example bolts. The feet 56 may merely rest on a suitable floor or may be secured to the floor by any convenient means, for example bolts. If desired the feet 56 may be provided with means for a height adjustment so that the modules 54 can be properly aligned even where the floor F is uneven to some extent. Support columns 57 of the frame assembly 40 are also mounted at intervals to the feet 56 and the columns are connected by parallel lengthwise extending support members, namely rails 60. Certain of the supports 51 are provided with mounting means 64 slidable along the lengthwise rails 60 and adapted to be clamped by a screw of the mounting means to said rails 60 at a desired position. These supports 51 can thus be adjusted lengthwise of the conveyor system 20 to almost any convenient position lengthwise of the conveyor system.

Additionally, the feet 56 of the frame assembly 40 comprise sockets 68 in which lower end portions of upright members 70 of certain supports 51 may be received and secured to mount certain of the supports. Conveniently, heavier items to be mounted are mounted on supports 51 carried by sockets 68 so that the load is transferred directly through the feet 56 to the ground on which the conveyor system 20 is mounted.

Although the supply means 24 may be carried by the supports 51, for some components it may be more convenient to provide the supply means 24 in the form of wheeled carriages in which terminated wire lengths are supported in troughs, as described in greater detail in the aforementioned European patent application.

The frame assembly 40 may further mount conduits 72 for services, for example electrical or pneumatic services to be provided at the work stations. Outlets 73 for services are provided at some, at least, of the work stations and at least one access at which the services may be introduced to the system is provided, conveniently at an end module 54.

The construction of the conveyor system by connecting a plurality of modules sufficient to build up a conveyor system of suitable length further increases the flexibility and efficiency of the illustrative fabrication system. By providing modules which may conveniently be about 2 metres in length, a conveyor 20 of an appropriate length for the manufacture of a particular wiring harness may readily be assembled. The mounting of the supports for the assembly equipment and component supplies in the second corridor 32 opposite the corridor in which most of the operators are positioned facilitates a compact manufacturing track. The ease with which the distance through which the belt 42 is advanced at each step can readily be adjusted by adjustment of the timing mechanism to suit particular manufacturing operations. If it is wished to slightly modify the manufacture of a particular wiring harness, it is relatively simple to introduce further equipment by adjustment of the supports 51 along the conveyor to suitable positions. The fact that the whole of the conveyor system is self contained, being all carried by the frame assembly 40 which also carries the services, facilitates the dismantling of a particular track and construction, using the components, of a different track to produce a different wiring harness. The illustrative system thus is very flexible in use and easily adapted for the manufacture of a wide variety of wiring harnesses with minimal inconvenience. Furthermore, the illustrative system makes effective use of available working floor space.

Certain upright members 59 of the frame assembly 40 project a considerable distance above the surface of the conveyor belt 42 and support a cord 61 which extends the whole length of the conveyor. At one end the cord is secured to an anchor member and at the other end the cord is secured to an operating switch of an alarm system. Thus if the cord is tightened by an operator, the switch of the alarm system is operated to immediately stop the drive means, stopping the conveyor belt 42 and giving an alarm signal, e.g. an audible alarm. When a line is dismantled and reassembled, the alarm can be dealt with merely by using a cord of an appropriate length.

As will be seen viewing the drawings, troughs 74 extend parallel with the conveyor one at either side of the belt 42 and are arranged to receive part of a wiring harness as it is moved by the belt during the course of manufacture, ensuring that the harness does not catch on any equipment or the like, being protected by the troughs. The internal surfaces of the troughs 74 are smooth and have no projections on which parts of the wiring harness may snag.

The illustrative conveyor system may also be provided with a sensor at the upstream end of the upper one of the conveyor belt 42 which senses whether any part remains on the belt and stops the conveyor feed if anything is sensed by the sensor. At the downstream outlet end of the belt 42 fingers are provided on the frame assembly 40 adapted to engage adjacent the fingers 50 to lift off any harness remaining on the belt at that stage: normally harnesses would have been removed from the belt and transferred before reaching the extreme end of the belt surface 42.

The illustrative fabricating system comprising the illustrative conveyor system is preferably used in carrying out a method embodying the invention for the fabrication of wiring harnesses. A supply of appropriate components to be assembled is provided in each of the component supply means 24 at each station 22 and appropriate assembly equipment is likewise provided at each of the stations 22. In carrying out the illustrative method an operator at a first station 22₁ selects components to be assembled from the supply at the first station 22₁ and effects a fabricating operation on the components: the fabricating operation may involve the attaching of suitable connectors to wires drawn from the supply, the taping together of a number of wires, for example using a taping machine or manually, or other assembly operations necessary in the manufacture of a wiring harness. After the fabricating operation at the first station 22₁ has been completed the component assembly produced is placed on the belt 42 in a designated one of the pairs of fingers 50 and in a designated orientation. The fabricating operation to be effected at the first (and each succeeding) station is chosen to be of such duration as to be completed just before the conveyor belt is advanced to carry each group of fingers 50 to the next succeeding station 22 downstream. Thus the first component assembly is transported by the conveyor belt to a second station 22₂, downstream of the first, at which an operator selects items from the component supply means 24 at the second station 22₂ and/or from the assembled components on the conveyor belt 42 and effects a further fabricating operation on the selected items. After the second fabricating operation is complete, the components involved are placed between designated pair of fingers 50 and in a designated orientation on the belt 42; this may be between the same pair of fingers 50 as were utilised in the first operation or a different pair of fingers. If the part of the wiring harness being assembled at this point is of a certain length, parts of the harness may be retained in two different pairs of fingers 50 so that appropriate parts of the partly assembled harness are conveniently presented for further assembling operations at downstream work stations. The conveyor belt is advanced through steps of the preselected length to transfer the partly assemble wiring harness successively to subsequent work stations 22ₙ, the operator at each of the subsequent stations effecting further fabricating operations on components selected from the supply at each said subsequent station and/or from the assembled components on the conveyor belt 42. As at the first two stations, the components which have been subjected to a fabricating operation are placed on the belt in a designated position and orientation. In this way a desired wiring harness is assembled for removal from the conveyor belt 42 at a final work station.

The illustrative fabrication system is effective with advancing steps for the conveyor belt 42 which are equal in length for the whole of the fabrication operation, effective for harnesses of up to 100 wires at least.

Assembly equipment to be provided at each work station 42 may comprise any of the equipment commonly utilised in the fabrication of wiring harnesses, for example taping equipment by which tape may be helically wound around a group of wires to bind them together, terminal attachment equipment, and/or a building board (or jig) on which various component parts of the wiring harness to be assembled may be positioned in desired orientations and then subjected to an appropriate manufacturing operation, for example a taping operation or the like. To facilitate handling, a building board is supported by a table 55 on the supports inclined downwardly from the support towards the operator to facilitate access. Likewise components supplies may be angled at a convenient angle for ready access by the operator. Taping machines may be counted lengthwise of the conveyor belt or in a direction transversely to the conveyor belt, projecting into the second corridor, provided that sufficient access is provided for the operator to effectively operate the equipment.

The illustrative system and method simplify the production control system as a complete wire harness can be built from start to finish on a single production line - in this way work in progress is minimised. Furthermore, by comparison with the conventional processes, work handling is considerably reduced. The electric motor of the drive means is preferably a pulse operated motor which can be very accurately controlled to operate and drive the belt through a carefully preselected distance. A space saving over existing known systems of production can be considerable, for example over 30%.

## Claims

1. A system for the fabrication of wiring harnesses comprising a conveyor (20) extending lengthwise, a plurality of work stations (22) disposed at intervals along the conveyor, supply means (24) for supplying components to be assembled at some of said work stations, the supply means at a work station being positioned for access by the operator (18) at that station, assembly equipment (26) at some of said work stations, the assembly equipment at a work station being positioned for access by the operator (18) at that station, a majority of the operators being located at one side of the conveyor in a first corridor (30) parallel with the conveyor (20) and the supply means (24) being positioned at the opposite side of the conveyor to the majority of the operators in a second corridor (32) parallel with the conveyor, wherein the second corridor (32) is wider than the first corridor (30).

2. A system according to claim 1 wherein the second corridor (32) is at least twice as wide as the first corridor (30).

3. A system according to either one of claims 1 and 2 wherein the supply means (24) and/or the assembly equipment (26) at at least one work station is positioned in said second corridor (32) with a part projecting over the conveyor (20) at the appropriate work station (22) for access by the operator (18) at that work station.

4. A system according to any one of the preceding claims wherein the conveyor comprises a plurality of retaining means (50) adapted to engage part of a harness (19) in the course of fabrication and retain it in position on the conveyor(20), the retaining means (50) being equally spaced apart along the conveyor, a group comprising at least two of such retaining means being located at each work station (22), and advancing means arranged to operate at preselected time intervals whereby to advance each group to the next succeeding work station.

5. A system for the fabrication of wiring harnesses comprising a conveyor (20) extending lengthwise and a plurality of work stations (22) disposed along the conveyor, the conveyor comprising a plurality of retaining means (50) adapted to engage part of a harness (19) in the course of fabrication and retain it in position on the conveyor, the retaining means (50) being spaced apart at equal intervals along the conveyor with a group comprising at least two such retaining means (50) located at each work station (22), and indexing means arranged to operate at preselected time intervals whereby to advance each group to the next succeeding work station.

6. A system according to either one of claims 4 and 5 comprising at least five retaining means in each group.

7. A system according to any one of claims 4 to 6 wherein the spacing between adjacent retaining means (50) is up to 300 mm.

8. A system according to any one of claims 4 to 7 wherein each retaining means comprises a pair of fingers (50) spaced lengthwise of the conveyor (22) a sufficient distance to receive and retain said part of a harness (19) between the pair of fingers.

9. A conveyor system (20) suitable for use in the fabrication of wiring (19) harnesses comprising a lengthwise extending frame assembly (40), endless conveying means (42) extending generally lengthwise, support means (44, 46, 48) for supporting and guiding the endless conveyor means, and a plurality of supports (51) adapted to be removably secured to said frame assembly (40) at preselected positions whereby to provide supports for component supplies (24) and/or equipment (26, 28) for access by an operator (18) at an adjacent one of a plurality of work stations (22) spaced apart along said conveyor system.

10. A system according to claim 9 wherein the frame assembly (40) comprises lengthwise extending frame members (60) and wherein the supports (51) are slidable along said frame members (60) and each support is adapted to be clamped to said frame members at a desired position.

11. A system according to claim 9 wherein the frame assembly comprises a plurality of sockets (68) by which the supports (51) may be mounted.

12. A system according to any one of claims 9 to 11 wherein the supports (51) are adapted to be secured to the frame assembly (40) to one side of the conveying means (20) and to project above and across the conveying means (20) towards the opposite side of the conveying means.

13. A system according to any one of claims 9 to 12 wherein the frame assembly (40) mounts conduits (72) for services to be provided at the work stations (22), outlets (73) for the services at some, at least, of the work stations (22), and at least one access means at which the services may be introduced to the system.

14. A system according to any one of claims 9 to 13 comprising alarm means disposed for access at some, at least, of the work stations.

15. A system according to any one of the preceding claims comprising a trough (74) extending parallel with the conveyor (20) and arranged adjacent the conveyor (20) to receive parts of a wiring harness (19) as it is conveyed by the conveying means.

16. A method for the fabrication of wiring harnesses (19) comprising providing a conveyor system (20) having a conveyor track (42), designating a plurality of work stations (22) along said track, positioning an operator (18) at each station at a first (30) side of said track, and providing a supply of components to be assembled in a component supply means (24) at each station at a second opposite side (32) of the track, the method further comprising (a) an operator (18) at a first station (22₁), selecting components to be assembled from the supply means (24) at the first station (22₁) and effecting a fabricating operation on the components and thereafter positioning the first component assembly on the conveyor track (42) in a designated position and orientation; (b) thereafter advancing the conveyor Track (42) to carry said component assembly to a second station (22₂); (c) an operator (18) at the second station selecting items from the component supply means (24) at the second station and/or from assembled components on the conveyor track (42) and effecting a further fabricating operation on said selected items and thereafter placing the components in a designated position and orientation on the conveyor track (42); and (d) advancing said conveyor track (42) to transfer said assembled components successively to subsequent stations (22ₙ), the operator at each of the subsequent stations (22ₙ) effecting further fabricating operations on components selected from the supply (24) at each said subsequent station and/or from the assembled components on the conveyor track (42) and placing the so-assembled components in designated positions and orientations on the conveyor track whereby to provide a desired wiring harness at a final work station.

17. A method according to claim 16 wherein there is used a system according to any one of claims 1 to 15.
